# EUROPÄISCHE PATENTSCHRIFT

(11) **EP 3 325 858 B1**
(45) Veröffentlichungstag und Bekanntmachung des Hinweises auf die Patenterteilung: **21.08.2019**
(21) Anmeldenummer: 16721827.0
(22) Anmeldetag: 12.05.2016
(51) Int. Cl.: F16J 15/32, F16J 15/34, F16J 15/36

(54) **GLEITRINGDICHTUNGSANORDNUNG MIT BALGELEMENT**
SLIP-RING SEAL ARRANGEMENT WITH BELLOWS ELEMENT
SYSTÈME D'ÉTANCHÉITÉ À BAGUE DE GLISSEMENT MUNI D'UN ÉLÉMENT SOUFFLET

(30) Priorität: 17.07.2015 DE 102015213472
(43) Veröffentlichungstag der Anmeldung: 30.05.2018
(73) Patentinhaber: EagleBurgmann Germany GmbH & Co. KG, 82515 Wolfratshausen (DE)
(72) Erfinder: ZIEGENBEIN, Dieter, 82538 Geretsried (DE); RIES, Wolfgang, 82433 Bad Kohlgrub (DE); SCHICKTANZ, Rudolf, 82538 Geretsried (DE); THELKE, Joerg, 82515 Wolfratshausen (DE); WOPPOWA, Robert, 82515 Wolfratshausen (DE); EILETZ, Andreas, 82515 Wolfratshausen (DE); HASELBACHER, Peter, 81479 München (DE); BRUSTMANN, Elisabeth, 82515 Wolfratshausen (DE)
(74) Vertreter: Hoefer & Partner Patentanwälte mbB
(86) Internationale Anmeldenummer: PCT/EP2016/060629
(87) Internationale Veröffentlichungsnummer: WO 2017/012731

(56) Entgegenhaltungen:
- CN-Y- 2 568 854
- US-A- 2 203 525
- US-A- 2 505 868
- US-A- 5 375 852

## Beschreibung

Die vorliegende Erfindung betrifft eine Gleitringdichtungsanordnung mit einem Balgelement, welche ein verbessertes axiales Nachsetzverhalten im Betrieb aufweist.

Gleitringdichtungsanordnungen mit Balgelementen sind aus dem Stand der Technik in unterschiedlichen Ausgestaltungen bekannt. Das Balgelement kann grundsätzlich ein Elastomerbalg oder ein Metallbalg sein, welche insbesondere ein axiales Nachsetzen der Gleitringdichtung, z.B. bei Wellenauslenkungen, ermöglicht. Es wurde festgestellt, dass sich insbesondere bei Verwendung eines Elastomerbalgs ein verschlechtertes Nachsetzverhalten der Gleitringdichtungsanordnung ergeben kann. Gründe hierfür sind einerseits, dass eine Stützschulter des Balgelements sich aufgrund der Weichheit des Elastomermaterials auf einer Wellenoberfläche oder dergleichen festsetzen kann und somit einem axialen Nachsetzen nicht schnell genug folgen kann. Dies tritt umso mehr auf, wenn beispielsweise Verschmutzungen auf der Wellenoberfläche vorhanden sind, welche im Betrieb durch Ablagerungen auf der Welle hervorgerufen werden können. Dies kann nach einem längeren Betreiben der Gleitringdichtungsanordnung bis zu einem vollständigen Blockieren der axialen Beweglichkeit des Balgelements führen. Es wurde weiterhin festgestellt, dass in Verbindung mit im Betrieb auftretenden Schwingungen die Stützschulter des Elastomerbalgs auch ohne Verschmutzungen aufgrund der erhöhten Reibung zwischen dem Elastomermaterial und der Welle zu einer Behinderung des Nachsetzverhaltens führen kann. Diese vorhergehend beschriebenen Probleme können hierbei im Betrieb zu einer erhöhten Leckage am Dichtspalt bis hin zu einem Ausfall der Gleitringdichtungsanordnung führen. Ähnliche Gleitringdichtungsanordnungen sind aus CN 2 568 854 Y, US 5 375 852 A, US 2 505 868 A und US 2 203 525 A bekannt.

Es ist daher Aufgabe der vorliegenden Erfindung, eine Gleitringdichtungsanordnung mit einem elastomeren Balgelement bereitzustellen, welche bei einfachem Aufbau und einfacher, kostengünstiger Herstellbarkeit über die gesamte Lebensdauer ein verbessertes Nachsetzverhalten aufweist, um insbesondere eine Gefahr eines Hängenbleibens oder Verkantens des Balgelements während eines Nachsetzvorgangs zu vermeiden.

Diese Aufgabe wird durch eine Gleitringdichtungsanordnung mit den Merkmalen des Anspruchs 1 gelöst. Die Unteransprüche zeigen bevorzugte Weiterbildungen der Erfindung.

Die erfindungsgemäße Gleitringdichtungsanordnung mit den Merkmalen des Anspruchs 1 hat den Vorteil, dass eine axiale Beweglichkeit eines rotierenden Elastomer-Balgelements signifikant verbessert wird. Hierdurch kann ein deutlich verbessertes axiales Nachsetzverhalten der Gleitringdichtungsanordnung erreicht werden, was im Betrieb zu deutlich reduzierten Leckageraten, insbesondere bei Anfahrvorgängen der Gleitringdichtungsanordnung, führt. Dies wird erfindungsgemäß dadurch erreicht, dass die Gleitringdichtungsanordnung eine Balgeinheit mit einem Balgelement und einer separaten, ringförmigen Zwischenscheibe aufweist. Das Balgelement umfasst einen ersten Anschlussbereich für eine Verbindung mit einem rotierenden Bauteil, wie z.B. einer rotierenden Welle, einen zweiten Anschlussbereich für eine Verbindung mit einem rotierenden Gleitring und einen flexiblen Balgzwischenbereich, welcher zwischen dem ersten und zweiten Anschlussbereich angeordnet ist. Dabei ist das Balgelement vollständig aus einem Elastomermaterial hergestellt. Die Zwischenscheibe ist aus einem steiferen Material als das Elastomermaterial hergestellt, insbesondere aus einem Kunststoff. Die ringförmige Zwischenscheibe ist dabei derart am Balgelement angeordnet, dass eine erste Seite der Zwischenscheibe am rotierenden Gleitring, insbesondere an einer Rückseite des rotierenden Gleitrings, anliegt und eine zweite Seite der Zwischenscheibe am Balgelement, insbesondere an einem Absatz des Balgelements am zweiten Anschlussbereich, anliegt. Die Zwischenscheibe weist dabei wenigstens einen Schlitz auf, welcher eine Schlitzbreite aufweist, die kleiner ist als eine Schlitzlänge. Der Schlitz ist dabei einseitig geschlossen derart, dass ein Verbindungsbereich an der Zwischenscheibe im Bereich des Schlitzes verbleibt. Mit anderen Worten ist der Schlitz in der Zwischenscheibe nicht durchgehend vorgesehen, sondern der Schlitz ist nur teilweise in der Zwischenscheibe ausgebildet, so dass am Verbindungsbereich immer noch ein ringförmig geschlossener Bereich der Zwischenscheibe verbleibt. Durch den teilweise vorgesehenen Schlitz in der Zwischenscheibe kann die Zwischenscheibe somit sich im Betrieb bei Erwärmung problemlos ausdehnen und bei Abkühlung auch wieder zusammenziehen. Der Schlitz verhindert dabei, dass die Zwischenscheibe auf das rotierende Bauteil, z.B. eine Welle, bei Abkühlung aufgeschrumpft wird. Der Verbindungsbereich am Schlitzende verhindert ein Aufweiten der Zwischenscheibe.

Besonders bevorzugt ist der Schlitz in der Zwischenscheibe derart angeordnet, dass der Schlitz von einem inneren Umfang der Zwischenscheibe aus vorgesehen ist. Dadurch können die temperaturbedingten Ausdehnungsvorgänge und Schrumpfungsvorgänge der Zwischenscheibe optimal durch die Zwischenscheibe ausgeglichen werden. Bei Abkühlung reduziert sich eine Schlitzbreite im Bereich der Mündung des Schlitzes am inneren Umfang der Zwischenscheibe. Der Schlitz verhindert dabei trotzdem ein Aufschrumpfen der Zwischenscheibe auf das rotierende Bauteil.

Besonders bevorzugt weist die Zwischenscheibe genau einen Schlitz auf. Hierdurch kann eine ausreichende temperaturbedingte Verformbarkeit der Zwischenscheibe sichergestellt werden.

Vorzugsweise entspricht die Schlitzbreite einer radialen Länge des Verbindungsbereichs.

Besonders bevorzugt weist der Schlitz eine Schlitzlänge auf, welche größer ist als die Hälfte einer Ringbreite der Zwischenscheibe in Radialrichtung. Besonders bevorzugt ist die Schlitzlänge größer oder gleich 3/4 der Ringbreite der Zwischenscheibe in Radialrichtung.

Weiter bevorzugt liegt ein Verhältnis der Schlitzbreite zu einer Schlitzlänge in einem Bereich von 0,05 bis 0,35. Das Verhältnis der Schlitzbreite zur Schlitzlänge beträgt besonders bevorzugt ca. 0,17.

Weiter bevorzugt ist ein Verhältnis der Schlitzlänge zur Ringbreite der Zwischenscheibe in einem Bereich von 0,7 bis 0,95. Besonders bevorzugt beträgt das Verhältnis der Schlitzlänge zur Ringbreite der Zwischenscheibe ca. 0,85.

Besonders bevorzugt weist die Zwischenscheibe an einem Innenumfang eine Vielzahl von Ausnehmungen auf. Dadurch wird eine Zwischenscheibe mit profiliertem Innenumfang erhalten. Hierdurch kann insbesondere auch eine Spülung des Bereichs innerhalb des Balgelements erreicht werden.

Weiter bevorzugt ist ein Innendurchmesser am inneren Umfangsbereich der Zwischenscheibe derart gewählt, dass ein Abstand zum rotierenden Bauteil vorhanden ist. Somit ist ein Ringspalt zwischen der Zwischenscheibe und dem rotierenden Bauteil vorgesehen, so dass Fluid immer in den inneren Bereich des Balgelements gelangen kann. Ferner kann dadurch sichergestellt werden, dass in allen Betriebszuständen ein Zusammenziehen der Zwischenscheibe insbesondere am inneren Umfangsbereich, sichergestellt ist.

Die Ausnehmungen sind dabei vorzugsweise regelmäßig am Innenumfang der Zwischenscheibe vorgesehen. Ferner weisen die Ausnehmungen bevorzugt eine bogenförmige geometrische Form oder eine im Wesentlichen rechteckige geometrische Form auf.

Weiter bevorzugt weist die Zwischenscheibe am Innenumfang eine ungerade Anzahl von Ausnehmungen auf.

Besonders bevorzugt geht der Schlitz dabei ausgehend von einer der Ausnehmungen aus.

Der Schlitz ist besonders bevorzugt in Radialrichtung vorgesehen.

Gemäß einer weiteren bevorzugten Ausgestaltung der vorliegenden Erfindung umfasst die Balgeinheit ferner einen ersten Z-Profilwinkel und einen zweiten Z-Profilwinkel. Der erste Z-Profilwinkel ist dabei an einer Außenseite des ersten Anschlussbereichs angeordnet und der zweite Z-Profilwinkel ist an einer Außenseite des zweiten Anschlussbereichs angeordnet. Die beiden Z-Profilwinkel sind dabei ringförmig ausgebildet und weisen einen Z-förmigen Querschnitt mit einem radial nach außen gerichteten Bereich, einem axialen Bereich und einem radial nach innen gerichteten Bereich auf. Die Z-Profilwinkel sind vorzugsweise aus einem metallischen Werkstoff hergestellt und versteifen zusätzlich die ersten und zweiten Anschlussbereiche des elastomeren Balgelements.

Besonders bevorzugt ist der zweite Z-Profilwinkel, welcher am zweiten Anschlussbereich angeordnet ist, derart angeordnet, dass in Axialrichtung der Gleitringdichtungsanordnung der zweite Z-Profilwinkel auf gleicher Höhe wie der zweite Anschlussbereich abschließt. Hierdurch wird eine vollständige Versteifung des zweiten Anschlussbereichs erreicht, so dass insbesondere eine Einspannlänge, mit welcher der zweite Anschlussbereich des Balgelements den rotierenden Gleitring einspannt, reduziert werden kann. Dies führt zu einer Reduzierung der Axiallänge der Balgeinheit und damit zu einer gewünschten Reduzierung der gesamten Axiallänge der Gleitringdichtungsanordnung.

Gemäß einer weiteren bevorzugten Ausgestaltung der Erfindung umfasst die Balgeinheit ferner ein Federelement, welches das Balgelement in Axialrichtung vorspannt. Das Federelement ist vorzugsweise eine Tonnenfeder. Besonders bevorzugt stützt sich das Federelement dabei mit einem ersten Endbereich am ersten Z-Profilwinkel ab und mit einem zweiten Endbereich am zweiten Z-Profilwinkel ab.

Für eine sichere Fixierung der Zwischenscheibe am Balgelement weist das Balgelement vorzugsweise eine Nut auf, in welcher die Zwischenscheibe angeordnet ist. Dadurch wird eine einfache Montage und sichere Fixierung der Zwischenscheibe am Balgelement erreicht.

Vorzugsweise erfolgt eine Drehmomenteinbringung eines Drehmoments des rotierenden Bauteils auf den rotierenden Gleitring ausschließlich über die Balgeinheit. Hierdurch kann eine besonders kompakte Ausführung bereitgestellt werden.

Weiter bevorzugt übergreift ein radial nach innen gerichteter Wandbereich des ersten Z-Profilwinkels ein zum Balgzwischenbereich gerichtetes Ende des ersten Anschlussbereichs. Bevorzugt übergreift auch ein radial nach innen gerichteter Wandbereich des zweiten Z-Profilwinkels ein zum Balgzwischenbereich gerichtetes Ende des zweiten Anschlussbereichs. Hierdurch kann eine verbesserte Steifigkeit des elastomeren Balgelements und insbesondre seiner beiden Anschlussbereiche erreicht werden.

Vorzugsweise weist das Balgelement eine Antihaft-Beschichtung auf.

Nachfolgend werden bevorzugte Ausführungsbeispiele der Erfindung unter Bezugnahme auf die begleitend Zeichnung im Detail beschrieben. Gleiche bzw. funktional gleiche Teile sind dabei mit den gleichen Bezugszeichen bezeichnet. In der Zeichnung ist:
- Fig. 1: eine schematische Längsschnittansicht einer Gleitringdichtungsanordnung gemäß einem ersten Ausführungsbeispiel der Erfindung,
- Fig. 2: eine vergrößerte Detaildarstellung von Fig. 1,
- Fig. 3: eine schematische Draufsicht einer Zwischenscheibe gemäß dem ersten Ausführungsbeispiel der Erfindung,
- Fig. 4: eine perspektivische Ansicht der Zwischenscheibe von Fig. 3,
- Fig. 5: eine Schnittansicht der Zwischenscheibe von Fig. 3,
- Fig. 6: eine schematische Ansicht einer Gleitringdichtungsanordnung gemäß einem zweiten Ausführungsbeispiel der Erfindung,
- Fig. 7: eine schematische Draufsicht der Zwischenscheibe von Fig. 6,
- Fig. 8: eine perspektivische Ansicht der Zwischenscheibe von Fig. 7, und
- Fig. 9: eine schematische Schnittansicht der Zwischenscheibe von Fig. 7.

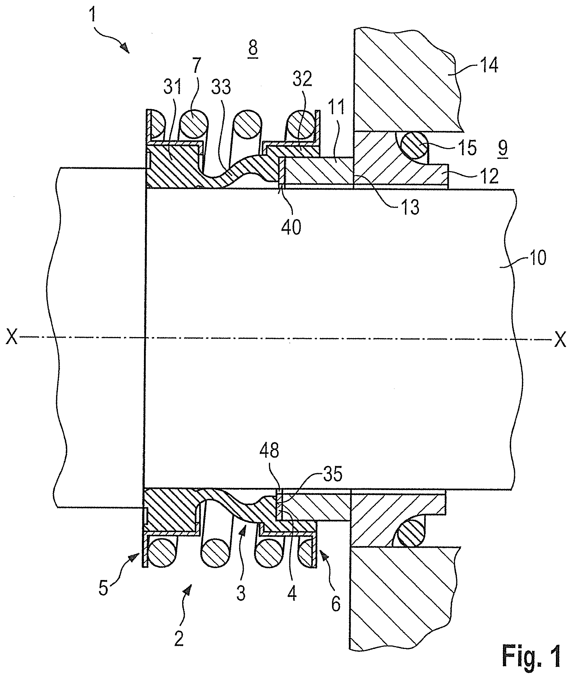

Nachfolgend wird unter Bezugnahme auf die Fig. 1 bis 5 eine Gleitringdichtungsanordnung 1 gemäß einem ersten Ausführungsbeispiel der Erfindung im Detail beschrieben.

Wie aus Fig. 1 ersichtlich ist, umfasst die Gleitringdichtungsanordnung 1 einen rotierenden Gleitring 11 und einen stationären Gleitring 12, welche in bekannter Weise zwischen sich einen Dichtspalt 13 definieren. Die Gleitringdichtungsanordnung 1 dient zur Abdichtung eines ersten Raumes 8 von einem zweiten Raum 9.

Der rotierende Gleitring 11 ist mit einem rotierenden Bauteil 10, welches in diesem Ausführungsbeispiel eine Welle ist, verbunden und dreht sich gemeinsam mit dieser. Der stationäre Gleitring 12 ist mit einem ortsfesten Gehäuse 14 verbunden. Das Bezugszeichen 15 bezeichnet ein Nebendichtelement zur Abdichtung des stationären Gleitrings 12 gegenüber dem Gehäuse 14.

Die Gleitringdichtungsanordnung 1 umfasst ferner eine Balgeinheit 2, welche die Verbindung zwischen dem rotierenden Gleitring 11 und dem rotierenden Bauteil 10 herstellt. Die Balgeinheit 2 umfasst ein Balgelement 3 und eine einteilige Zwischenscheibe 4. Das Balgelement 3 ist aus einem Elastomermaterial hergestellt und umfasst einen ersten Anschlussbereich 31, einen zweiten Anschlussbereich 32 und einen zwischen beiden Anschlussbereichen 31, 32 liegenden Balgzwischenbereich 33. Der Balgzwischenbereich 33 ist flexibel und ermöglicht eine Verlängerung und Verkürzung des Balgelements 3 in Axialrichtung X-X.

Wie aus Fig. 1 ersichtlich ist, ist das Balgelement 3 ein einteiliges Bauteil und dient zur Abdichtung am rotierenden Gleitring 11. Weiterhin übernimmt die Balgeinheit 2 eine Drehmomentübertragung vom rotierenden Bauteil 10 auf den rotierenden Gleitring 11.

Die Balgeinheit 2 umfasst ferner einen ersten Z-Profilwinkel 5 und einen zweiten Z-Profilwinkel 6. Der erste Z-Profilwinkel 5 ist am ersten Anschlussbereich 31 an dessen Außendurchmesser angeordnet. Der zweite Z-Profilwinkel 6 ist am zweiten Anschlussbereich 32 an dessen Außendurchmesser angeordnet. Die beiden Z-Profilwinkel 5, 6 weisen im Schnitt ein Z-Profil auf.

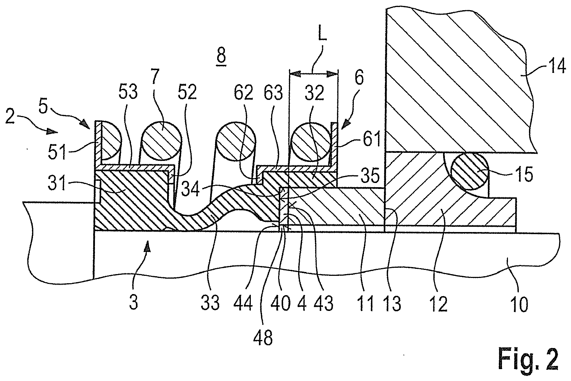

Der erste Z-Profilwinkel 5 umfasst einen ersten radial nach außen gerichteten Bereich 51, einen ersten radial nach innen gerichteten Bereich 52 und einen ersten Axialbereich 53. Der zweite Z-Profilwinkel 6 umfasst einen zweiten radial nach außen gerichteten Bereich 61, einen zweiten radial nach innen gerichteten Bereich 62 und einen zweiten Axialbereich 63 (vergleiche Fig. 2). Der erste radial nach innen gerichtete Bereich 52 des ersten Z-Profilwinkels übergreift dabei ein zum Balgzwischenbereich 33 gerichtetes Ende des ersten Anschlussbereichs 31. Der zweite radial nach innen gerichtete Bereich 62 des zweiten Z-Profilwinkels 6 übergreift ein zum Balgzwischenbereich 33 gerichtetes Ende des zweiten Anschlussbereichs 32 (vergleiche Fig. 1). Die beiden Axialbereiche 53, 63 der beiden Z-Profilwinkel 5, 6 liegen dabei auf den Außendurchmessern des ersten und zweiten Anschlussbereichs 31, 32 auf. Hierdurch werden die elastomeren Anschlussbereiche 31, 32 verpresst.

Ferner liegen ein Ende des zweiten Anschlussbereichs 32 und der zweite radial nach außen gerichtete Bereich 61 des zweiten Z-Profilwinkels 6 in Axialrichtung X-X auf gleicher Höhe, so dass sich ein ebener Abschluss ergibt.

Das Balgelement 3 umfasst ferner an seinem Innenumfang einen Absatz 34. Wie aus Fig. 2 ersichtlich ist, liegt die Zwischenscheibe 4 dabei an einer stirnseitigen Anlagefläche 35 an. Ein innerer Umfangsbereich 40 der Zwischenscheibe weist einen Abstand zum Außenumfang des rotierenden Bauteils 10 auf. Hierdurch ergibt sich ein ringförmiger Spalt 48 zwischen dem inneren Umfangsbereich 40 der Zwischenscheibe 4 und dem rotierenden Bauteil 10. Dadurch wird eine ständige Verbindung des rotierenden Gleitrings 11 zum Bereich zwischen dem Balgelement 3 und dem rotierenden Bauteil 10 sichergestellt.

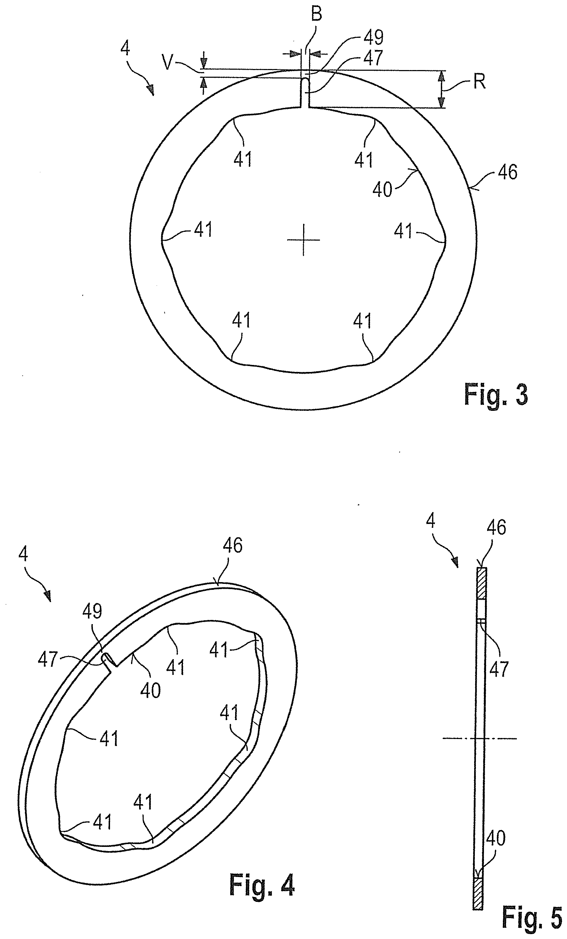

Die Fig. 3 bis 5 zeigen im Detail die Zwischenscheibe 4. Wie aus Fig. 3 ersichtlich ist, sind am inneren Umfangsbereich der Zwischenscheibe 4 eine Vielzahl von Ausnehmungen 41 vorgesehen. Die Ausnehmungen 41 vergrößern dabei den Durchgangsquerschnitt am Balgelement. Dadurch wird das axiale Nachsetzverhalten des Balgelements immer aufrechterhalten.

Weiterhin weist die Zwischenscheibe 4 einen Schlitz 47 auf. Der Schlitz 47 verläuft ausgehend vom inneren Umfangsbereich 40 der Zwischenscheibe 4 radial nach außen. Dabei ist der Schlitz 47 nicht durchgehend bis zum äußeren Umfangsbereich 46 der Zwischenscheibe 4 gebildet. Es verbleibt ein Verbindungsbereich 49 an der Zwischenscheibe. Dadurch weist die Zwischenscheibe immer noch einen zwischen äußerem und innerem Umfang liegenden Materialbereich auf, wodurch eine gewisse Stabilität der Zwischenscheibe sichergestellt wird und ein Aufweiten der Zwischenscheibe vermieden wird.

Der Schlitz 47 weist eine Breite B und eine Schlitzlänge S auf, derart, dass ein Verhältnis der Schlitzbreite B zu der Schlitzlänge S ungefähr 0,12 beträgt. Die Schlitzbreite B entspricht auch ungefähr der Radiallänge des Verbindungsbereichs 49. Somit ist die Breite B des Schlitzes 47 gleich wie eine Breite V des Verbindungsbereichs 49 gewählt. Der Schlitz 47 ist in diesem Ausführungsbeispiel an einem Zwischenbereich zwischen zwei Ausnehmungen 41 angeordnet. Eine maximale Ringbreite R der Zwischenscheibe und die Schlitzlänge S sind dabei derart gewählt, dass ein Verhältnis der Schlitzlänge zur Ringbreite ungefähr 0,9 beträgt.

Wie aus Fig. 2 ersichtlich ist, ist die ringförmige Zwischenscheibe 4 dabei zwischen dem rotierenden Gleitring 11 und dem Balgelement 3 derart angeordnet, dass die Zwischenscheibe 4 mit einer ersten Seite 43 an einer rückwärtigen Seite des rotierenden Gleitrings 11 anliegt, und mit einer zweiten Seite 44 an der stirnseitigen Anlagefläche 35 des Balgelements 3 anliegt. Die Zwischenscheibe 4 weist ferner eine konstante Breite auf.

Die Balgeinheit 2 umfasst ferner ein Vorspannelement 7, welches in diesem Ausführungsbeispiel eine Tonnenfeder ist. Das Vorspannelement 7 stützt sich dabei zwischen dem ersten Z-Profilwinkel 5 und dem zweiten Z-Profilwinkel 6 ab und stellt eine permanente Vorspannung der Balgeinheit 2 bereit.

Durch das erfindungsgemäße Vorsehen der steifen Zwischenscheibe 4 zwischen dem elastomeren Balgelement 3 und dem rotierenden Gleitring 11 kann erfindungsgemäß nun ein verbessertes axiales Nachsetzverhalten der Gleitringdichtungsanordnung 1 ermöglicht werden. Insbesondere kann durch die geschlitzte, ringförmige Zwischenscheibe 4 ein axiales Nachsetzverhalten des Balgelements in allen Betriebszuständen sichergestellt werden. Bei hohen Temperaturen dehnt sich die Zwischenscheibe 4 aus, so dass der Spalt 48 zwischen dem inneren Umfangsbereich 40 der Zwischenscheibe 4 und dem rotierenden Bauteil ausreichend groß ist. Bei Abkühlung zieht sich die Zwischenscheibe radial nach innen zusammen. Dabei ermöglicht jedoch nun der vom inneren Umfangsbereich 40 ausgehende Schlitz 47, dass sich der innere Umfangsbereich bei Abkühlung auch zusammenzieht, ohne dass dadurch ein Aufschrumpfen der Zwischenscheibe 4 auf das rotierende Bauteil 10 erfolgt. Dadurch bleibt die axiale Nachsetzfähigkeit des Balgelements auch bei tiefen Temperaturen aufrechterhalten.

Erfindungsgemäß stellt dabei die nur teilweise geschlitzte Zwischenscheibe somit eine sehr einfache und kostengünstige Lösung für temperaturbedingte Änderungen der Abmessungen der Zwischenscheibe 4 bereit.

Weiterhin verhindert der Verbindungsbereich 49, welcher radial am Ende des Schlitzes 47 in der Zwischenscheibe vorgesehen ist, dass bei Ausweitung der Zwischenscheibe durch eine Kante am äußeren Umfangsbereich eine Beschädigung des elastomeren Balgelements 3 auftritt.

Somit kann erfindungsgemäß das Problem des Aufschrumpfens der Zwischenscheibe 4 auf das rotierende Bauteil 10 gelöst werden, ohne dass dadurch Beschädigungen am Balgelement auftreten und ohne dass Nachteile hinsichtlich des axialen Nachsetzverhaltens des Balgelements 3 auftreten.

Die Zwischenscheibe 4, welche beispielsweise aus einem stabilen Kunststoffmaterial hergestellt sein kann, kann sich dagegen ohne Anhaftungserscheinungen auf dem Außenumfang des rotierenden Bauteils 10 bewegen und auch Verschmutzungen von der Oberfläche des rotierenden Bauteils entfernen. Somit kann der bisher im Stand der Technik vorhandene Nachteil bei elastomeren Balgelementen hinsichtlich ihres Nachsetzverhaltens nach gewisser Laufzeit durch das geschickte Vorsehen der Zwischenscheibe 4 überwunden werden. Ferner kann erfindungsgemäß eine Leckage am Dichtspalt 13 signifikant reduziert werden, da ein axiales Nachsetzen der Gleitringdichtung immer möglich ist und die Dichtspaltbreite möglichst klein gehalten werden kann.

Die Zwischenscheibe 4 hat ferner noch den Vorteil einer möglichen deutlichen Verkürzung der Gleitringdichtungsanordnung in Axialrichtung X-X, da auf eine im Stand der Technik bei elastomeren Balgelementen bisher notwendige Stützschulter, welche im Bereich des zweiten Anschlussbereichs 32 vorgesehen war und das Balgelement 3 auf dem rotierenden Bauteil 10 abstützt, verzichtet werden kann. Hierdurch ergibt sich eine Einsparung von Axialbauraum. Gleichzeitig ergibt sich durch die Verwendung der Zwischenscheibe 4 auch die Möglichkeit, den rotierenden Gleitring 11 in Axialrichtung X-X durch einen längeren Axialbereich 63 des zweiten Z-Profilwinkels 6 über eine längere Axialrichtung einzuspannen (Einspannlänge L) und somit eine radiale Verpressung des rotierenden Gleitrings 11 zu reduzieren (vgl. Figur 2). Hierdurch ergeben sich positive Auswirkungen auf den rotierenden Gleitring 11 insbesondere hinsichtlich einer möglichen, unerwünschten Verformung der Gleitfläche des rotierenden Gleitrings 11. Diese Verformung kann im Betrieb zu zusätzlicher, unerwünschter Leckage an der Gleitringdichtung führen.

Die erfindungsgemäße Balgeinheit 2 ermöglicht somit eine Reihe von überraschenden Vorteilen bei der Verwendung von elastomeren Balgelementen 3. Dabei kann die Balgeinheit 2 in Axialrichtung X-X noch kompakter aufgebaut werden. Durch die Möglichkeit der Verkürzung der Dichtungsbaulänge in Axialrichtung X-X ergibt sich somit ein extrem großer Wettbewerbsvorteil. Weiterhin kann die erfindungsgemäße Balgeinheit 2 auch die gegebenenfalls im Betrieb auftretenden Schwingungen problemlos dämpfen und durch ständig mögliche axiale Nachsetzbewegungen auch nach langer Laufzeit noch ausführen.

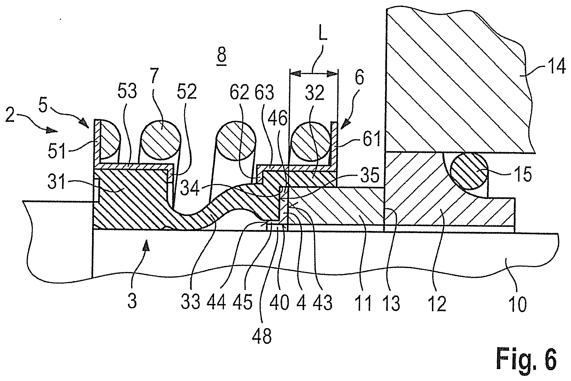

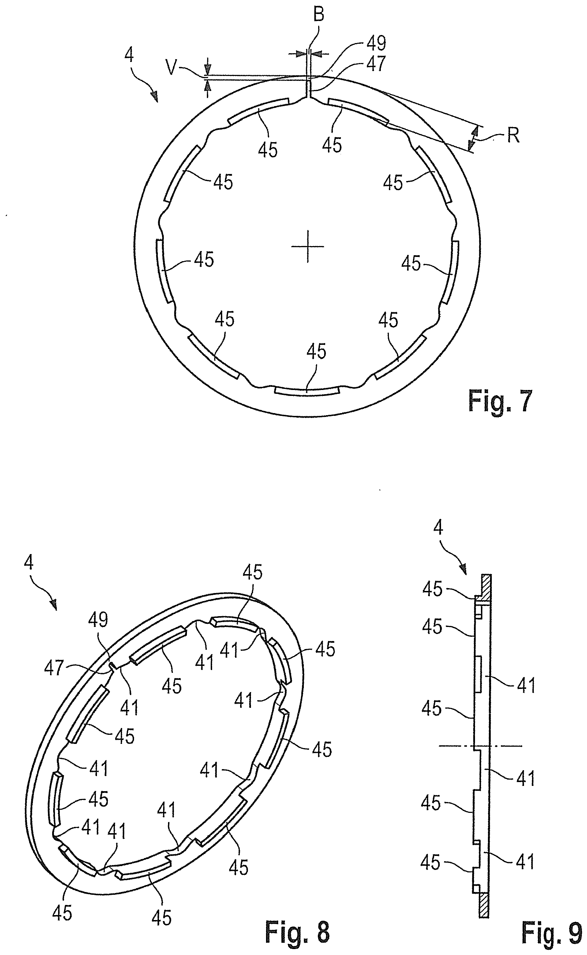

Die Fig. 6 bis 9 zeigen eine Gleitringdichtungsanordnung gemäß einem zweiten Ausführungsbeispiel, bei der die Zwischenscheibe 4 zusätzlich noch in Axialrichtung X-X vorstehende Absätze 45 aufweist. Diese vorstehenden Absätze 45 sind am inneren Umfangsbereich 40 der Zwischenscheibe 4 gebildet. Dabei sind am inneren Umfangsbereich 40 jeweils abwechselnd eine Ausnehmung 41 und ein axial vorstehender Absatz 45 vorgesehen (vgl. Fig. 8). Eine Anzahl der Ausnehmung 41 und eine Anzahl der axial vorstehenden Absätze 45 ist dabei ungerade. In diesem Ausführungsbeispiel sind jeweils neun Ausnehmungen 41 und neun Absätze 45 vorgesehen. Der Schlitz 47 ist dabei ausgehend von einer Ausnehmung 41 radial nach außen gebildet.

Die Ausnehmungen 41 sind wiederum bogenförmig vorgesehen. Wie aus Fig. 9 ersichtlich ist, weist die Zwischenscheibe 4 somit im Schnitt eine L-Form auf, wenn der Schnitt durch einen axial vorstehenden Absatz 45 gelegt wird.

Die axial vorstehenden Absätze 45 ermöglichen dabei eine stabile Abstützung des Balgelements 3. Weiterhin wird dadurch sichergestellt, dass das Balgelement 3 im Bereich des zweiten Anschlussbereiches 32 nicht mit dem rotierenden Bauteil 10 in Kontakt kommen kann und beispielsweise ein axiales Nachsetzverhalten des Balgelements 3 beeinträchtigen kann. Die Absätze 45 stellen somit eine Abstützung des elastomeren Balgelement 3 bereit, ohne dass die Fähigkeit der erfindungsgemäßen Zwischenscheibe 4, sich am inneren Umfangsbereich 40 bei Abkühlung zusammenziehen zu können, beeinträchtigt wird.

### Bezugszeichenliste

- 1: Gleitringdichtungsanordnung
- 2: Balgeinheit
- 3: Balgelement
- 4: Zwischenscheibe
- 5: Erster Z-Profilwinkel
- 6: Zweiter Z-Profilwinkel
- 7: Vorspannelement
- 8: Erster Raum
- 9: Zweiter Raum
- 10: Rotierendes Bauteil/Welle
- 11: Rotierender Gleitring
- 12: Stationärer Gleitring
- 13: Dichtspalt
- 14: Gehäuse
- 15: Nebendichtelement/O-Ring
- 31: Erster Anschlussbereich
- 32: Zweiter Anschlussbereich
- 33: Balgzwischenbereich
- 34: Absatz
- 35: Stirnseitige Anlagefläche des Balgelements
- 40: Innerer Umfangsbereich
- 41: Ausnehmung
- 42: Vorstehende Bereiche
- 43: Erste Seite
- 44: Zweite Seite
- 45: Absatz
- 46: Äußerer Umfangsbereich
- 47: Schlitz
- 48: Ringförmiger Spalt
- 49: Verbindungsbereich
- 51: Erster radial nach außen gerichteter Bereich
- 52: Erster radial nach innen gerichteter Bereich
- 53: Erster Axialbereich
- 61: Zweiter radial nach außen gerichteter Bereich
- 62: Zweiter radial nach innen gerichteter Bereich
- 63: Zweiter Axialbereich
- B: Breite des Schlitzes
- L: Axiale Einspannlänge
- S: Länge des Schlitzes
- R: Maximale Ringbreite der Zwischenscheibe
- V: Radiale Breite des Verbindungsbereichs
- X-X: Axialrichtung

## Patentansprüche

1. Gleitringdichtungsanordnung, umfassend
- einen rotierenden Gleitring (11) und einen stationären Gleitring (12), welche zwischen sich einen Dichtspalt (13) definieren, und
- eine Balgeinheit (2) mit einem Balgelement (3),
- wobei das Balgelement (3) einen ersten Anschlussbereich (31), einen zweiten Anschlussbereich (32) und einen Balgzwischenbereich (33) aufweist,
- wobei das Balgelement (3) aus einem Elastomermaterial hergestellt ist und eine Verbindung zwischen dem rotierenden Gleitring (11) und einem rotierenden Bauteil (10) bereitstellt,
- wobei die Balgeinheit (2) ferner eine Zwischenscheibe (4) umfasst,
- wobei die Zwischenscheibe (4) zwischen dem Balgelement (3) und dem rotierenden Gleitring (11) angeordnet ist, **dadurch gekennzeichnet, dass**
- die Zwischenscheibe (4) wenigstens einen Schlitz (47) aufweist, der eine Schlitzbreite (B) aufweist, die kleiner als eine Schlitzlänge (S) ist, und
- wobei der Schlitz (47) einseitig geschlossen ist, so dass am Schlitz (47) ein Verbindungsbereich (49) an der Zwischenscheibe (4) verbleibt.

2. Gleitringdichtungsanordnung nach Anspruch 1, **dadurch gekennzeichnet, dass** der Schlitz (47) von einem inneren Umfangsbereich (40) der Zwischenscheibe (4) ausgeht.

3. Gleitringdichtungsanordnung nach einem der vorhergehenden Ansprüche, **dadurch gekennzeichnet, dass** genau ein Schlitz (47) an der Zwischenscheibe (4) vorgesehen ist.

4. Gleitringdichtungsanordnung nach einem der vorhergehenden Ansprüche, **dadurch gekennzeichnet, dass** eine Schlitzbreite (B) einer radialen Länge des Verbindungsbereichs (49) entspricht.

5. Gleitringdichtungsanordnung nach einem der vorhergehenden Ansprüche, **dadurch gekennzeichnet, dass** ein Verhältnis der Schlitzbreite (B) zur Schlitzlänge (S) in einem Bereich von 0,05 bis 0,35 liegt und insbesondere ungefähr 0,17 beträgt.

6. Gleitringdichtungsanordnung nach einem der vorhergehenden Ansprüche, **dadurch gekennzeichnet, dass** ein Verhältnis der Schlitzlänge (S) zu einer Ringbreite (R) der Zwischenscheibe in einem Bereich von 0,7 bis 0,95 liegt und insbesondere 0,85 beträgt.

7. Gleitringdichtungsanordnung nach einem der vorhergehenden Ansprüche, **dadurch gekennzeichnet, dass** am inneren Umfangsbereich (40) der Zwischenscheibe (4) eine Vielzahl von Ausnehmungen (41) vorgesehen ist.

8. Gleitringdichtungsanordnung nach Anspruch 7, **dadurch gekennzeichnet, dass** die Ausnehmungen (41) in regelmäßigen Abständen am inneren Umfangsbereich (40) der Zwischenscheibe (4) angeordnet sind und/oder dass die Zwischenscheibe (4) eine ungerade Anzahl von Ausnehmungen aufweist.

9. Gleitringdichtungsanordnung nach Anspruch 7 oder 8, **dadurch gekennzeichnet, dass** der Schlitz (47) ausgehend von einer der Ausnehmungen (41) vom inneren Umfangsbereich (40) aus verläuft.

10. Gleitringdichtungsanordnung nach einem der Ansprüche 7 bis 9, **dadurch gekennzeichnet, dass** die Zwischenscheibe (4) eine Vielzahl von axial vorstehenden Absätzen (45) aufweist, welche abwechselnd mit den Ausnehmungen (41) am inneren Umfangsbereich (40) der Zwischenscheibe (4) gebildet sind.

11. Gleitringdichtungsanordnung nach einem der vorhergehenden Ansprüche, wobei die Balgeinheit (2) ferner einen ersten Z-Profilwinkel (5) und einen zweiten Z-Profilwinkel (6) umfasst, wobei der erste Z-Profilwinkel (5) an einer Außenseite des ersten Anschlussbereichs (31) angeordnet ist und wobei der zweite Z-Profilwinkel (6) an einer Außenseite des zweiten Anschlussbereichs (32) angeordnet ist.

12. Gleitringdichtungsanordnung nach Anspruch 11, **dadurch gekennzeichnet, dass** der zweite Z-Profilwinkel (6) in Axialrichtung (X-X) auf gleicher Höhe wie der zweite Anschlussbereich (32) endet.

13. Gleitringdichtungsanordnung nach einem der Ansprüche 11 oder 12, **dadurch gekennzeichnet, dass** ein erster radial nach innen gerichteter Bereich (52) des ersten Z-Profilwinkels (5) ein zum Balgzwischenbereich (33) gerichtetes Ende des ersten Anschlussbereichs (31) übergreift und/oder dass ein zweiter radial nach innen gerichteter Bereich (62) des zweiten Z-Profilwinkels (6) ein zum Balgzwischenbereich (33) gerichtetes Ende des zweiten Anschlussbereichs (32) übergreift.

14. Gleitringdichtungsanordnung nach einem der Ansprüche 11 bis 13, ferner umfassend ein Vorspannelement (7), welches die Balgeinheit (2) in Axialrichtung (X-X) vorspannt, wobei das Vorspannelement (7) sich mit einem ersten Endbereich am ersten Z-Profilwinkel (5) und mit einem zweiten Endbereich am zweiten Z-Profilwinkel (6) abstützt.

## Claims

1. Mechanical seal arrangement, comprising
- a rotating slide ring (11) and a stationary slide ring (12) which define a sealing gap (13) in between them, and
- a bellows unit (2) with a bellows element (3),
- wherein the bellows element (3) has a first connector area (31), a second connector area (32), and a bellows intermediate area (33),
- wherein the bellows element (3) is made of an elastomer material and provides a connection between the rotating slide ring (11) and a rotating structural component (10),
- wherein the bellows unit (2) further comprises an intermediate disc (4),
- wherein the intermediate disc (4) is arranged between the bellows element (3) and the rotating slide ring (11),
**characterized in that**
- the intermediate disc (4) has at least one slit (47) that has a slit width (B) that is smaller than a slit length (S), and
- wherein the slit (47) is closed on one side, so that a connection area (49) remains at the slit (47) at the intermediate disc (4).

2. Mechanical seal arrangement according to claim 1, **characterized in that** the slit (47) begins at an inner circumferential area (40) of the intermediate disc (4).

3. Mechanical seal arrangement according to any of the preceding claims, **characterized in that** exactly one slit (47) is provided at the intermediate disc (4).

4. Mechanical seal arrangement according to any of the preceding claims, **characterized in that** a slit width (B) corresponds to a radial length of the connection area (49).

5. Mechanical seal arrangement according to any of the preceding claims, **characterized in that** a ratio of the slit width (B) to the slit length (S) is in a range of 0.05 to 0.35, and in particular is approximately 0.17.

6. Mechanical seal arrangement according to one of the preceding claims, **characterized in that** a ratio of the slit length (S) to a ring width (R) of the intermediate disc is in a range of 0.7 to 0.95, and in particular is 0.85.

7. Mechanical seal arrangement according to any of the preceding claims, **characterized in that** a plurality of recesses (41) is provided at the inner circumferential area (40) of the intermediate disc (4).

8. Mechanical seal arrangement according to claim 7, **characterized in that** the recesses (41) are arranged at regular distances at the inner circumferential area (40) of the intermediate disc (4), and/or that the intermediate disc (4) has an uneven number of recesses.

9. Mechanical seal arrangement according to claim 7 or 8, **characterized in that** the slit (47) extends from the inner circumferential area (40) beginning at one of the recesses (41).

10. Mechanical seal arrangement according to any of the claims 7 to 9, **characterized in that** the intermediate disc (4) has a plurality of axially projecting ledges (45) which are formed alternatingly with the recesses (41) at the inner circumferential area (40) of the intermediate disc (4).

11. Mechanical seal arrangement according to any of the preceding claims, wherein the bellows unit (2) further comprises a first Z profile angle (5) and a second Z profile angle (6), wherein the first Z profile angle (5) is arranged at an outer side of the first connector area (31), and wherein the second Z profile angle (6) is arranged at an outer side of the second connector area (32).

12. Mechanical seal arrangement according to claim 11, **characterized in that** the second Z profile angle (6) ends at the same height in the axial direction (X-X) as the second connector area (32).

13. Mechanical seal arrangement according to any of the claims 11 or 12, **characterized in that** a first radially inward facing area (52) of the first Z profile angle (5) overlaps with an end of the first connector area (31) that faces towards the bellows intermediate area (33), and/or that a second radially inward facing area (62) of the second Z profile angle (6) overlaps with an end of the second connector areas (32) that faces the bellows intermediate area (33).

14. Mechanical seal arrangement according to any of the claims 11 to 13, further comprising a pre-tensioning element (7) which pre-tensions the bellows unit (2) in the axial direction (X-X), wherein the pre-tensioning element (7) is supported at a first end area at the first Z profile angle (5), and is supported with a second end area at the second Z profile angle (6).

## Revendications

1. Système d'étanchéité à bague de glissement, comprenant
- une bague de glissement rotative (11) et une bague de glissement fixe (12), lesquelles définissent entre elles un interstice d'étanchéité (13), et
- une unité soufflet (2) avec un élément soufflet (3),
- dans lequel l'élément soufflet (3) présente une première zone de raccord (31), une deuxième zone de raccord (32) et une zone intermédiaire de soufflet (33),
- dans lequel l'élément soufflet (3) est fabriqué en un matériau élastomère et fournit une liaison entre la bague de glissement rotative (11) et un composant rotatif (10),
- dans lequel l'unité soufflet (2) comprend en outre un disque intermédiaire (4),
- dans lequel le disque intermédiaire (4) est agencé entre l'élément soufflet (3) et la bague de glissement rotative (11), **caractérisé en ce que** le disque intermédiaire (4) présente au moins une fente (47), qui présente une largeur de fente (B), qui est inférieure à une longueur de fente (S), et
- dans lequel la fente (47) est fermée d'un côté de sorte qu'au niveau de la fente (47), il reste une zone de liaison (49) au niveau du disque intermédiaire (4).

2. Système d'étanchéité à bague de glissement selon la revendication 1, **caractérisé en ce que** la fente (47) part d'une zone périphérique intérieure (40) du disque intermédiaire (4).

3. Système d'étanchéité à bague de glissement selon l'une quelconque des revendications précédentes, **caractérisé en ce qu'**exactement une fente (47) est prévue au niveau du disque intermédiaire (4).

4. Système d'étanchéité à bague de glissement selon l'une quelconque des revendications précédentes, **caractérisé en ce qu'**une largeur de fente (B) correspond à une longueur radiale de la zone de liaison (49).

5. Système d'étanchéité à bague de glissement selon l'une quelconque des revendications précédentes, **caractérisé en ce qu'**un rapport entre la largeur de fente (B) et la longueur de fente (S) se situe dans une plage de 0,05 à 0,35 et est en particulier d'environ 0,17.

6. Système d'étanchéité à bague de glissement selon l'une quelconque des revendications précédentes, **caractérisé en ce qu'**un rapport entre la longueur de fente (S) et une largeur de bague (R) du disque intermédiaire se situe dans une plage de 0,7 à 0,95 et est en particulier de 0,85.

7. Système d'étanchéité à bague de glissement selon l'une quelconque des revendications précédentes, **caractérisé en ce qu'**une pluralité d'évidements (41) sont prévus au niveau de la zone périphérique intérieure (40) du disque intermédiaire (4).

8. Système d'étanchéité à bague de glissement selon la revendication 7, **caractérisé en ce que** les évidements (41) sont agencés à distances régulières au niveau de la zone périphérique intérieure (40) du disque intermédiaire (4) et/ou que le disque intermédiaire (4) présente un nombre impair d'évidements.

9. Système d'étanchéité à bague de glissement selon la revendication 7 ou 8, **caractérisé en ce que** la fente (47) s'étend en partant d'un des évidements (41) à partir de la zone périphérique intérieure (40).

10. Système d'étanchéité à bague de glissement selon l'une quelconque des revendications 7 à 9, **caractérisé en ce que** le disque intermédiaire (4) présente une pluralité de gradins (45) en saillie axiale, lesquels sont formés alternativement avec les évidements (41) au niveau de la zone périphérique intérieure (40) du disque intermédiaire (4).

11. Système d'étanchéité à bague de glissement selon l'une quelconque des revendications précédentes, dans lequel l'unité soufflet (2) comprend en outre une première équerre profilée en forme de Z (5) et une deuxième équerre profilée en forme de Z (6), dans lequel la première équerre profilée en forme de Z (5) est agencée au niveau d'un côté extérieur de la première zone de raccord (31) et dans lequel la deuxième équerre profilée en forme de Z (6) est agencée au niveau d'un côté extérieur de la deuxième zone de raccord (32).

12. Système d'étanchéité à bague de glissement selon la revendication 11, **caractérisé en ce que** la deuxième équerre profilée en forme de Z (6) se termine dans la direction axiale (X-X) à la même hauteur que la deuxième zone de raccord (32).

13. Système d'étanchéité à bague de glissement selon l'une quelconque des revendications 11 ou 12, **caractérisé en ce qu'**une première zone (52) dirigée radialement vers l'intérieur de la première équerre profilée en forme de Z (5) vient en prise sur une extrémité dirigée vers la zone intermédiaire de soufflet (33) de la première zone de raccord (31) et/ou qu'une deuxième zone (62) dirigée radialement vers l'intérieur de la deuxième équerre profilée en forme de Z (6) vient en prise sur une extrémité dirigée vers la zone intermédiaire de soufflet (33) de la deuxième zone de raccord (32).

14. Système d'étanchéité à bague de glissement selon l'une quelconque des revendications 11 à 13, comprenant en outre un élément de précontrainte (7), lequel précontraint l'unité soufflet (2) dans la direction axiale (X-X), dans lequel l'élément de précontrainte (7) s'appuie avec une première zone d'extrémité sur la première équerre profilée en forme de Z (5) et avec une deuxième zone d'extrémité sur la deuxième équerre profilée en forme de Z (6).
